Europäisches Patentamt

European Patent Office

Office européen des brevets

(19)

(11) Publication number: **0 363 642 B1**

(12) **EUROPEAN PATENT SPECIFICATION**

(45) Date of publication of patent specification: **16.12.92**    (51) Int. Cl.⁵: **E05F 3/16**, E05F 3/00, E05F 5/00

(21) Application number: **89116467.5**

(22) Date of filing: **06.09.89**

(54) **Mechanical door check.**

(30) Priority: **06.09.88 JP 223304/88**

(43) Date of publication of application:
**18.04.90 Bulletin 90/16**

(45) Publication of the grant of the patent:
**16.12.92 Bulletin 92/51**

(84) Designated Contracting States:
**DE FR GB**

(56) References cited:
**EP-A- 0 243 786**
**FR-A- 966 945**
**US-A- 1 918 879**

(73) Proprietor: **KABUSHIKI KAISHA SANKYO SEIKI SEISAKUSHO**
**5329, Shimosuwa-machi**
**Suwa-gun Nagano-ken(JP)**

(72) Inventor: **Orii, Makoto c/o K. K. Sankyo Seiki Seisakusho**
**No. 5329, Shimosuwa-machi**
**Suwa-gun Nagano(JP)**
Inventor: **Hayashi, Katsuhiko K. K. Sankyo Seiki Seisakusho**
**No. 5329, Shimosuwa-machi**
**Suwa-gun Nagano(JP)**

(74) Representative: **Henkel, Feiler, Hänzel & Partner**
**Möhlstrasse 37**
**W-8000 München 80(DE)**

EP 0 363 642 B1

## Description

### BACKGROUND OF THE INVENTION

#### Field of the Invention

The present invention relates to a door check for automatically closing an open door and, more particularly, to a continuous speed change type door check for closing the door at a continuously changing speed.

#### Description of the Prior Art

A mechanical door check, which is one of door checks of different types and in which a pivot pin is rotated in conjunction with the opening of a door so that a slider is straightly moved in conjunction with the rotation of the pivot pin to cause a spring to store a self-restoring force which is used to close the door, was proposed. The rotation of the pivot pin is transmitted to a brake means through a speed increase gear train to brake the closing of the door. It is desirable for the feeling of the handling of the door that the speed of the closing thereof is relatively high at the initial stage of the closing and becomes relatively low at the final stage thereof. In the Japanese Patent Application 19032/88 and (OPI) EP-A-0298514AI (the term "OPI" as used herein means an "unexamined published application"), the present applicant proposed a mechanical door check in which a cam is provided in a rotation transmission line between a pivot pin and a brake means for the purpose of changing the speed of closing of a door.

Although the door check proposed by the present applicant acts to attain the purpose, the cam and a cam follower early undergo nonuniform wear because the speed increase ratio in the door check is changed by the cam and the cam follower so that the cam is nonuniformly loaded. This is a problem. If the problem is to be solved, the cam and the cam follower need to be made of expensive material and a mechanism for returning the cam to the original position thereof needs to be provided. This would result in complicating the constitution of the door check and increasing the cost thereof. Besides, there is another problem that the pattern of the change in the closing speed of the door and the range of operation for the change are limited because the closing speed of the door is changed by the cam.

### SUMMARY OF THE INVENTION

The present invention was made in order to solve the above-mentioned problems. These problems are solved by a door check according to claim 1. Such door check comprises incompletely circular gears engaged with each other so as to augment the speed increase ratio between them according as a door turns in such a direction as to close in a speed increase gear train which transmits the rotation of a pivot pin to a brake means so that the rotation speed of the brake means is made higher than that of the pivot pin.

When the door equipped with the door check provided in accordance with the present invention is opened, the pivot pin of the door check is rotated to move a slider to store forces in springs. When a force opening the door is removed, the slider is moved by the stored forces of the springs to rotate the pivot pin to turn the door in the direction to close. The rotation of the pivot pin is transmitted to the brake means through the speed increase gear train. The speed increase ratio in the speed increase gear train is gradually augmented by the action of the incompletely circular gears along with the progress in the closing of the door so as to increase the braking force of the brake means to reduce the closing speed of the door.

### BRIEF DESCRIPTION OF THE DRAWINGS

Other objects, features and advantages of the present invention will become apparent from the following description to be made in connection with the embodiments thereof with reference to the accompanying drawings, in which:

Fig. 1 is a horizontal sectional view of a door check which is an embodiment of the present invention;

Fig. 2 is a vertical sectional view of the door check;

Figs. 3 and 4 are cross-sectional views of major parts of the door check;

Fig. 5 is a sectional view of a major part of the brake means of the door check;

Fig. 6 is a vertical sectional view of the door check in the state that a door is closed;

Fig. 7 is a graph indicative of the relationship between the degree of openness of the door and closing speed thereof and that between the degree of openness thereof and the braking force of the brake means.

### DETAIL DESCRIPTION OF THE PREFERRED EMBODIMENTS

An embodiment of the present invention is hereafter described in detail with reference to the drawings attached hereto.

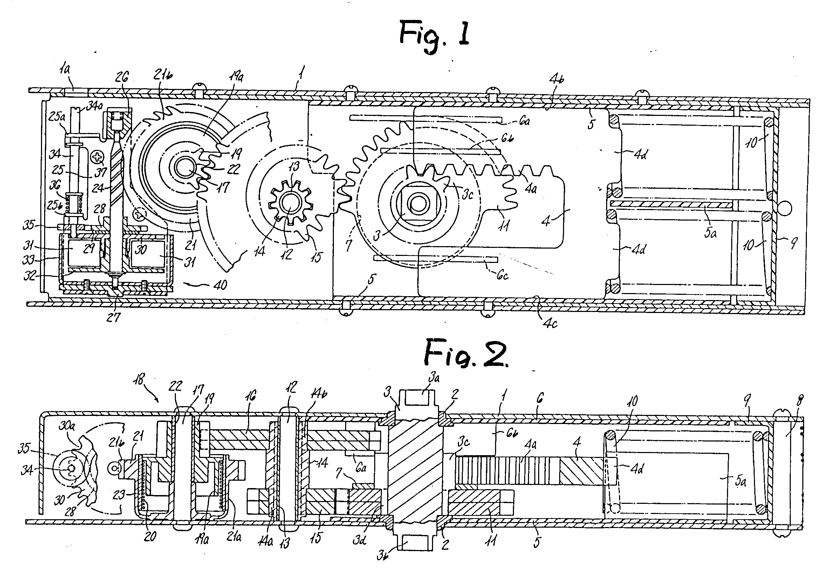

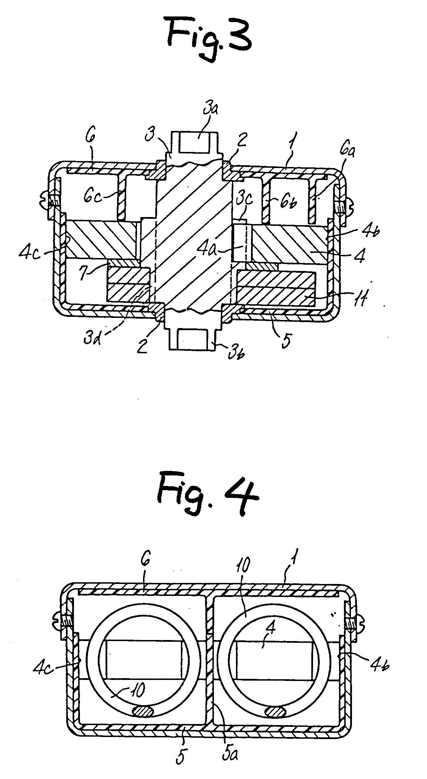

Figs. 1, 2, 3 and 4 show a door check which is the embodiment. In the door check, a pivot pin 3 is rotatably supported by a pair of bearings 2 nearly in the central portion of a case 1 shaped as a rectangular parallelepiped and composed of two channel-shaped members secured to each other by screws. The case 1 is secured to an appropriate portion of a door not shown in the drawings. The pivot pin 3 projects at both the ends thereof from the case 1, and is coupled to a doorframe (not shown in the drawings) through a link engaged with one end of the pivot pin but not shown in the drawings. The pivot pin 3 is formed with a pinion 3c on the nearly central portion of the pivot pin and with splines 3d on the lower portion of the pivot pin. A rack 4a formed on a slider 4 is engaged with the pinion 3c. The slider 4 looks shaped as U when it is seen vertically, as shown in Fig. 1. Both the sides of the slider 4 are located in sliding contact with a guide member 5 provided on the inside surface of the case 1. The guide member 5 is made of a synthetic resin of high resistance to wear and engaged with the case 1 and the bearings 2 so that the guide member is kept in a prescribed position. The guide member 5 has a partition wall 5a for preventing a pair of helical coil springs 10 from interfering with each other when they are elongated. When the slider 4 slides, it is guided on the top thereof by the ribs 6a, 6b and 6c of a guide member 6 provided on the inside surface of the case 1 and is guided on the bottom of the slider by a guide disk 7 unmovably fitted on the pivot pin 3. In other words, the slider 4 is guided by the guide members 5 and 6 and the guide disk 7, as shown in Fig. 3, so that the slider is straightly moved. A spring stopper 9 is provided at the right-hand end -as to Figs. 1 and 2- of the case 1 so that the stopper is made unmovable by a stay 8. The helical coil springs 10 are resiliently interposed between the spring stopper 9 and one end 4d of the slider 4. The splines 3d of the pivot pin 3 are engaged with a partially-vortical incompletely - circular gear 11 of large diameter. The gear 11 is composed of two gears manufactured by punching steel plates. As shown in Fig. 1, the radius of the toothed portion of the gear 11 is gradually increased clockwise as to Fig. 1. A support shaft 12 is secured to the case 1. A quill 14 is rotatably supported with an interposed synthetic resin sleeve 13 on the support shaft 12. A partially vortical gear 15 of small diameter and an overdrive gear 16 are coupled by splines to the quill 14 at the lower and upper ends 14a and 14b thereof, respectively. The radius of the toothed portion of the partially vortical gear 15 is gradually increased clockwise as to Fig. 1. The gear 15 is always engaged with the other partially-vortical gear 11. Each of the gears 15 and 16 is composed of two punched steel plates.

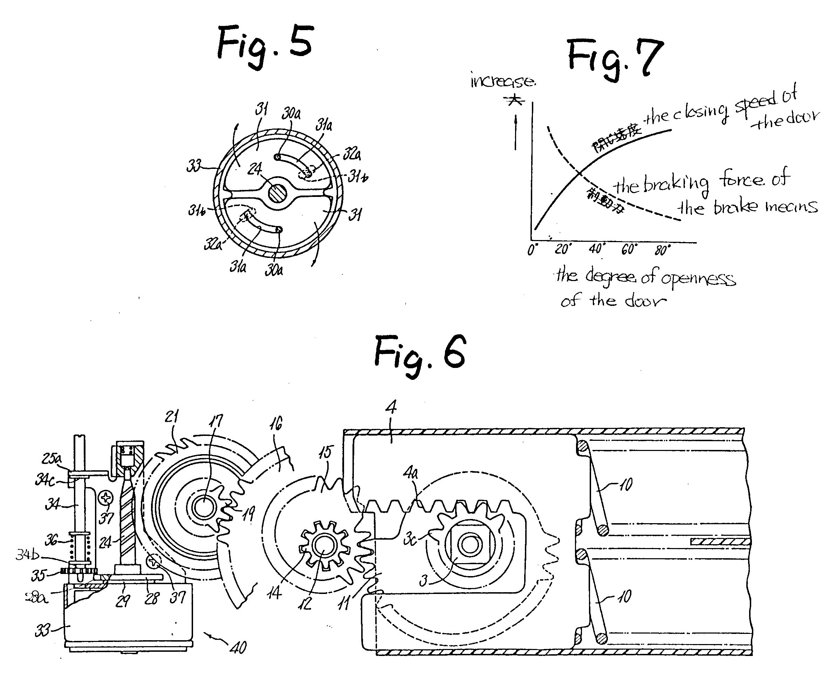

A support shaft 17 is secured to the case 1 and supports a one-way clutch 18 which is a spring clutch and comprises a small-diameter drive gear 19 engaged with the overdrive gear 16, a helical spring 20, and a driven gear 21 which is a worm wheel. The drive gear 19 is supported with an interposed synthetic resin sleeve 22 on a shaft. The helical spring 20 is interposed between the cylindrical portion 19a of the drive gear 19 and that 21a of the driven gear 21 and acts so that the rotation of the drive gear is transmitted to the driven gear when the drive gear is rotated in such a direction as to close the door but that the rotation of the drive gear is not transmitted to the driven gear when the drive gear is rotated in the direction reverse to the former. A metal sleeve 23 is provided between the helical spring 20 and the inside circumferential surface of the cylindrical portion 21a of the driven gear 21. The teeth 21b of the driven gear 21 are engaged with a worm 24 rotatably supported at both the thin end portions thereof by bearings 26 and 27 secured to a plate 25. When the pivot pin 3 is rotated in such a direction as to close the door, the rotation of the pivot pin is transmitted to the worm 24 through the partially vortical gears 11 and 15, the overdrive gear 16, the drive gear 19 and the driven gear 21 which constitute a speed increase gear train. The partially vortical gears 11 and 15 constitute a pair of incompletely circular gears for changing the speed increase ratio in the gear train. The worm 24 is provided with a brake means 40 comprising an adjusted gear 28 secured to the worm 24 and having a notch 28a in the peripheral portion of the gear, a friction shoe 29, a rotation preventive disk 30 rotatably mounted on the worm, friction plates 31 engaged with pins 30a formed on the disk as shown in Fig. 5, a friction plate support member 32 which is a plate and is formed with pins 32a for the friction plates and secured to the worm and whose movement in the axial direction of the support member is restricted by an E-shaped ring, and a brake cup 33 secured to the plate 25 and surrounding the friction plates. As shown in Fig.5, the friction plates 31 have arc-shaped holes 31a at the side of the rotation preventive disk 30, and arc-shaped grooves 31b at the side of the support member 32. An adjusting shaft 34 is movably fitted in the bent portions 25a and 25b of the plate 25. One end 34a of the adjusting shaft 34 faces the hole 1a of the case 1. An adjusting gear 35 is secured to the adjusting shaft 34 at the other end 34b thereof so that the gear can be engaged with and disengaged from the adjusted gear 28. A spring 36 urges the adjusting shaft 34 to move in such a direction as to disengage the adjusting gear 35 and the adjusted gear 28 from each other. The movement of the adjusting shaft 34 under the urging action of the spring 36 is restricted because of the butting of the stopper 34c of the shaft to the bent portion 25a of the plate 25 as shown in Fig. 6. The plate 25 supporting the brake means 40 is secured to the case 1 by screws 37. Although Fig. 1 shows that the adjusting gear 35 on the adjusting shaft 34 is engaged with the adjusted gear 28 in order to adjust the brake force of the brake means 40, the gears are usually disengaged from each other as shown in Fig. 6.

The operation of the door check is described in detail from now on. Fig. 1 shows that the slider 4 and the partially vortical gears 11 and 15 in the state that the door not shown in the drawing is opened. In that state, the large-diameter portion of the partially vortical gear 15 is engaged with the small-diameter portion of the other partially vortical gear 11, and the slider 4 is moved through the action of the pinion 3c and that of the rack 4a, so that the springs 10 are compressed and urge the slider in such a direction as to close the door. When the force keeping the door opened is removed, the self-restoring forces of the springs 10 act to move the slider 4 leftward as to Fig. 1 so that the rack 4a rotates the pivot pin 3 counterclockwise as to Fig. 1 through the action of the pinion 3c. As a result, the door begins to turn in such a direction as to close, because of the action of the link coupled to the pivot pin 3. The rotation of the pivot pin 3 is transmitted to the partially vortical gear 15 through the other partially vortical gear 11 in such a manner that the rotation speed of the gear 15 is higher than that of the pivot pin. The ratio of the rotation speed of the gear 15 to that of the pivot pin 3 increases according as the door turns in the direction to close. The rotation of the partially vortical gear 15 is transmitted to the drive gear 19 of the one-way transmission clutch 18 through the overdrive gear 16 so that the drive gear is rotated at a higher speed than the partially vortical gear. The rotation of the drive gear 19 is transmitted to the driven gear 21 through the spring 20 so that the driven gear is rotated. Since the driven gear 21 is engaged with the worm 24, the worm is rapidly rotated. When the rotation speed of the worm 24 has reached a prescribed level, the friction plates 31 are swung, by centrifugal forces, about the pins 30a in directions shown by arrows in Fig.5, so that the friction plates rub the inside circumferential surface of the brake cup 33 to brake the rotation of the worm. Thus, a braking force acts to the pinion 3c or the pivot pin 3 through the speed increase gear train so as to brake the door turning in the direction to close.

Fig. 6 shows that the members of the door check are in the state that the door not shown in the drawings is closed. In that state, the large-diameter portion of the partially vortical gear 11 and the small-diameter portion of the other partially vortical gear 15 are engaged with each other. When the engagement of the gears 11 and 15 changes from the state shown in Fig. 1 to that shown in Fig. 6, the gear ratio of the gear 11 to the other gear 15 increases gradually. For that reason, the ratio of the rotation speed of the pivot pin 3 to that of the partially vortical gear 15 increases according as the door turns in the direction to close. Consequently, the braking force of the brake means 40 strengthens according as the angle of openness of the door decreases. When the braking force of the brake means 40 strengthens, the rotation speed of the pivot pin 3 is lowered. Therefore, the closing speed of the door falls according as the angle of openness thereof decreases, as shown in Fig. 7. When the door is closed, the partially vortical gears 11 and 15 are stopped as they remain engaged with each other, as shown in Fig. 6.

When the door is opened, the pivot pin 3 is rotated clockwise as to Fig. 6 and the slider 4 is moved rightward as to Fig. 6 through the action of the rack 4c engaged with the pinion 3c of the pivot pin, so that the springs 10 are compressed. At that time, the partially vortical gear 11 is rotated clockwise so that the other partially vortical gears 15 engaged therewith is rotated counterclockwise. The counterclockwise rotation of the gear 15 results in rotating the drive gear 19 clockwise through the action of the overdrive gear 16. Since the rotation of the drive gear 19 at the time of the opening of the door is not transmitted to the driven gear 21 through the action of the spring 20, the worm 24 is not rotated. For that reason, the brake means 40 is not put in action when the door is opened. In other words, the door is opened without being loaded by the brake means.

The way of adjusting the braking force of the brake means 40 is described with reference to Figs. 1 and 5 from now on. A screw-driver is first inserted into the hole 1c of the case 1 to push the adjusting shaft 24 inward against the resilient force of a spring 36 to engage the adjusting gear 35 with the adjusted gear 28 and engage the inner end of the adjusting shaft in one of the notches 30a of the rotation preventive disk 30. The adjusting shaft 34 is thereafter rotated so that the pins 32a of the support plate 32 push the friction plates 31 at the arc-shaped grooves 31b thereof. As a result, the pins 32a are moved in the arc-shaped holes 31a of the friction plates 31, as shown in Fig. 5, so that the centers of swing of the friction plates 31 are shifted. When the position of the pins 32a are thus changed, the friction plates 31 are spread from each other depending on the centrifugal forces acting thereto, so that the rubbing forces of the friction plates to the brake cup 33 are altered to change the braking force acting to the pivot pin 3 or the door.

In a door check provided according to the present invention, incompletely circular gears are engaged with each other in a speed increase gear train so that the speed increase ratio between the gears augments when a door turns in such a direction as to close. Since the gears are engaged with each other along much of the circumference of each of them, the gears are prevented from being very nonuniformly worm. For that reason, the speed of the closing of the door is stably maintained as predetermined. Since the degree of freedom of the change in the pattern of the closing speed of the door can be heightened by altering the formed of the incompletely circular gears, it is easy to meet the desire of the user of the door check.

## Claims

1. A door check comprising a pivot pin (3) which is rotated in conjunction with the opening and closing of a door; a slider (4) which is straightly moved in conjunction with the rotation of said pivot pin (3); a means for urging said slider (4) to rotate said pivot pin (3) in such a direction as to close said door; a speed increase gear train which transmits the rotation of said pivot pin (3) in such a manner that the rotation speed of the rotation output portion of said gear train is made higher than that of the rotation input portion thereof; a brake means (40) provided at said rotation output portion; a one-way clutch (18) provided in said gear train so as to transmit the rotation of said gear train to said brake means (40) only when said door closes; and a pair of incompletely circular gears (11, 15) provided in said gear train so that the speed increase ratio between said gears increases according as said door closes.

2. A door check according to claim 1, characterized in that said slider (4) is formed with a rack (4a) engaged with a gear (3c) formed on said pivot pin (3), a first helical spring (10) is provided for urging said slider (4) in such a direction as to rotate said pivot pin (3) in such a direction as to close said door and said one-way clutch (18) comprises a second helical spring for transmitting the rotation of said gear train to said brake means (40), whereby the rotation speed of said pivot pin (3) is diminished along with the decrease in the angle of openess of said door so as to reduce the speed of the closing of said door.

3. A door check according to the claim 1 or 2, wherein the brake means (40) comprises a worm (24) engaged with the rotation output gear (21) of the speed increase gear train; a friction part (31) provided on said worm (24) so as to be swung by a centrifugal force based on the rapid rotation of said worm (24); and a brake cup (33) with which said part (31) comes into contact at the time of the swinging thereof so as to brake said worm (24).

4. A door check according to claim 1 or 2, wherein the means for urging the slider (4) is disposed at one side of the pivot pin (3); and the speed increase gear train, the one-way clutch (18) and the brake means (40) are disposed at the other side of said pivot pin (3).

## Patentansprüche

1. Türschließer mit einem Schwenkbolzen (3), der in Verbindung mit dem Öffnen und Schließen einer Tür gedreht wird, mit einem Schiebeelement (4), das in Verbindung mit der Drehung des Schwenkbolzens (3) geradlinig bewegt wird, mit einer das Schiebeelement (4) antreibenden Einrichtung zum Drehen des Schwenkbolzens (3) in einer Richtung, in der die Türe geschlossen wird, mit einem geschwindigkeitssteigerndem Getriebezug, der die Drehung des Schwenkbolzens (3) in einer solche Weise überträgt, daß die Drehgeschwindigkeit des Drehungsausgangsabschnittes des Getriebezugs gegenüber derjenigen des Drehungseingangsabschnitts erhöht ist, mit einer am Drehungsausgangsabschnitt vorgesehenen Bremseinrichtung (40), mit einer Einwegkupplung (18), die in dem Getriebezug derart vorgesehen ist, daß sie die Drehung des Getriebezugs nur beim Schließen der Tür auf die Bremseinrichtung (40) überträgt, und mit einem Paar unvollständig kreisförmiger Zahnräder (11,15), die in dem Getriebezug derart vorgesehen sind, daß das Geschwindigkeitserhöhungsverhältnis beim Schließen der Türe zwischen diesen Zahnrädern zunimmt.

2. Türschließer nach Anspruch 1, dadurch gekennzeichnet, daß das Schiebeelement (4) als Zahnstange (4a) ausgebildet ist, die sich in Eingriff mit einem auf dem Schwenkbolzen (3) ausgebildeten Zahnrad (3c) befindet, daß eine erste Schraubenfeder (10) vorgesehen ist, um das Schiebeelement (4) in eine solche Richtung zu treiben, daß der Schwenkbolzen (3) in eine Richtung zum Schließen der Türe gedreht wird, und

daß die Einwegkupplung (18) eine zweite Schraubenfeder zum Übertragen der Drehung des Getriebezugs auf die Bremseinrichtung (40) aufweist,

wodurch die Drehgeschwindigkeit des Schwenkbolzens (3) mit der Verringerung des Öffnungswinkels der Türe abnimmt, so daß die Schließgeschwindigkeit der Türe reduziert wird.

3. Türschließer nach Anspruch 1 oder 2, dadurch gekennzeichnet,

daß die Bremseinrichtung (40) eine mit dem Drehungsausgangszahnrad (21) des geschwindigkeitssteigernden Getriebezugs in Eingriff befindliche Schnecke (24),

ein auf der Schnecke (24) vorgesehenes Reibungselement (31), das durch die infolge der schnellen Drehung der Schnecke (24) hervorgerufene Zentrifugalkraft geschwungen wird, und

eine Bremstasse (33), mit der das Element (31) bei dessen Schwingen zum Bremsen der Schnecke (24) in Berührung gelangt, aufweist.

4. Türschließer nach Anspruch 1 oder 2, dadurch gekennzeichnet,

daß die das Schiebeelement (4) antreibende Einrichtung an einer Seite des Schwenkbolzens (3) angeordnet ist und daß der geschwindigkeitssteigernde Getriebezug, die Einwegkupplung (18) und die Bremseinrichtung (40) an der anderen Seite des Schwenkbolzens (3) angeordnet sind.

**Revendications**

1. Ferme-porte comprenant un pivot (3) qui est entraîné en rotation conjointement avec l'ouverture et la fermeture d'une porte ; un coulisseau (4) qui est entraîné en ligne droite conjointement avec la rotation dudit pivot (3) ; un moyen servant à solliciter ledit coulisseau (4) pour faire tourner ledit pivot (3) dans un sens tendant à fermer ladite porte ; un train d'engrenages multiplicateur de vitesse qui transmet la rotation dudit pivot (3) de manière que la vitesse de rotation de la partie de sortie de rotation dudit train d'engrenages soit rendue supérieure à celle de la partie d'entrée de rotation de ce train ; un moyen de freinage (40) prévu sur ladite partie de sortie de rotation ; et un accouplement unidirectionnel (18) prévu dans ledit train d'engrenages de manière à transmettre la rotation dudit train d'engrenages audit moyen de freinage (40) uniquement lorsque ladite porte se ferme ; et une paire d'engrenages incomplètement circulaires (11, 15) prévus dans ledit train d'engrenages de manière que le rapport de multiplication de vitesse entre lesdits engrenages croisse au fur et à mesure que ladite porte se ferme.

2. Ferme-porte selon la revendication 1, caractérisé en ce que ledit coulisseau (4) est muni d'une crémaillère (4a) en prise avec un engrenage (3c) formé sur ledit pivot (3), un premier ressort hélicoïdal (10) est prévu pour solliciter ledit coulisseau (4) dans un sens propre à faire tourner ledit pivot (3) dans le sens de la fermeture de ladite porte, et ledit accouplement unidirectionnel (18) comprend un second ressort hélicoïdal servant à transmettre la rotation dudit train d'engrenages audit moyen de freinage (40), de sorte que la vitesse de rotation dudit pivot (3) décroît avec la diminution de l'angle d'ouverture de ladite porte, de façon à réduire la vitesse de fermeture de ladite porte.

3. Ferme-porte selon la revendication 1 ou 2, dans lequel le moyen de freinage (40) comprend une vis sans fin (24) qui est en prise avec l'engrenage (21) de sortie de rotation du train d'engrenages multiplicateur de vitesse ; une partie de friction (31) prévue sur ladite vis sans fin (24) de manière à être repoussée par une force centrifuge résultant de la rotation rapide de ladite vis (24) ; et un tambour de frein (33) avec lequel ladite partie (31) entre en contact lorsqu'elle pivote de manière à freiner ladite vis sans fin (24).

4. Ferme-porte selon la revendication 1 ou 2, dans lequel le moyen servant à solliciter le coulisseau (4) est disposé sur un côté du pivot (3) ; et le train d'engrenages multiplicateur de vitesse, l'accouplement unidirectionnel (18) et le moyen de freinage (40) sont disposés de l'autre côté dudit pivot (3).

# Fig. 1

# Fig. 2.

EP 0 363 642 B1

# Fig.3

# Fig. 4

# Fig. 5

# Fig. 7

increase.

開放速度 the closing speed of the door

the braking force of the brake means

制動力

0° 20° 40° 60° 80°

the degree of openness of the door

# Fig. 6

EP 0 363 642 B1